# DEMANDE DE BREVET EUROPEEN

(11) **EP 2 207 131 A1**
(43) Date de publication de la demande: **14.07.2010**
(21) Numéro de dépôt: 09305031.8
(22) Date de dépôt: 13.01.2009
(51) Int. Cl.: G06K 19/07

(54) **Carte à mémoire munie d'un microcontrôleur personnalisé**

(71) Demandeur: Gemalto SA, 92190 Meudon (FR)
(72) Inventeur: Charles, Yan, 92197 Meudon Cedex (FR); Marseille, François-Xavier, 92197 Meudon Cedex (FR)

(57) **Abrégé**

L'invention permet de réduire fortement le temps de personnalisation d'une carte à mémoire incluant deux microcontrôleurs (210 et 211). L'invention correspond à un dispositif à circuit intégré comportant un connecteur (214) conforme à un standard de communication; un premier circuit (210), de type microcontrôleur, ayant une première interface (220) reliée au connecteur (214) et une deuxième interface (230); un deuxième circuit (211), de type microcontrôleur, ayant une interface de communication reliée à la deuxième interface (230). La deuxième interface (230) dispose d'une entrée/sortie supportant un état de haute impédance et la liaison entre l'interface de communication du deuxième circuit (211) et la deuxième interface (230) est aussi reliée à au moins un plot (Dat1 ou Dat2) de contact externe du dispositif. Une connexion directe de l'interface de communication du deuxième circuit (230) avec un dispositif externe est alors possible.

## Description

L'invention se rapporte à une carte à mémoire munie d'un microcontrôleur personnalisé. Ce type de carte à mémoire correspond aux cartes à mémoire qui comporte un microcontrôleur de carte à puce pour réaliser une application sécurisée.

De nombreux standards de carte à mémoire sont connus. Parmi ceux-ci, on peut citer les standards SD, MMC, Compact Flash, Memory Stick. Ces standards sont aussi appelé à être utilisé comme standard de communication pour des dispositifs au format de carte à mémoire qui réalisent des fonctions de type interface de communication ou de type sécurisation des données. A titre indicatif, le standard SD comprend différentes extensions de format pour adresser des dispositifs autre que de simple carte à mémoire. Ainsi l'extension SD-IO permet d'adresser différentes interfaces de communication et SD-MCE (pour Mobile Commerce Extension) permet de sécuriser des transactions électroniques telles que de la télévision à péage.

Si l'on s'intéresse aux applications SD-MCE pour la télévision à péage, les cartes réalisées comportent un microcontrôleur de gestion d'interface SD et de gestion de mémoire qui communique avec un microcontrôleur de sécurisation communément utilisé dans les cartes à puce de sécurisation. Les microcontrôleurs de carte à puce sont classiquement utilisés pour des applications bancaire, de télécommunication ou encore de télévision à péage et utilisent une interface de communication de type ISO 7816 ou USB et communiquent par des échanges de commande appelées APDU. Ces microcontrôleurs de carte à puce nécessitent d'être personnalisés avant leur mise en service. La personnalisation consiste à charger le code correspondant à l'application souhaitée avec des données dites personnelles associées à un utilisateur.

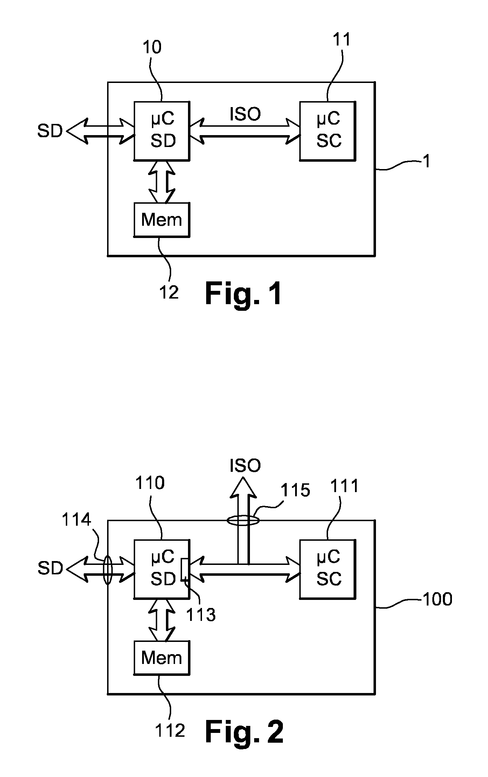

La figure 1 illustre un exemple de réalisation d'une carte SD incorporant une fonction de sécurisation. La carte 1 comporte un premier microcontrôleur 10, un deuxième microcontrôleur 11 et une mémoire 12. Le premier microcontrôleur 10 dispose d'une interface SD pour communiquer avec l'extérieur, d'une interface IS07816 pour communiquer avec le deuxième microcontrôleur 11 et d'un bus parallèle pour lire et écrire dans la mémoire 12. Lors de la personnalisation du deuxième microcontrôleur 11, la communication se fait par l'intermédiaire du bus SD. Ainsi, les commandes à destination du deuxième microcontrôleur 11 doivent être empaquetées dans un message conforme au format SD et le premier microcontrôleur 10 doit transcrire ce message au format ISO ou USB puis l'envoyer au deuxième microcontrôleur 11. Une telle opération nécessite de charger au préalable le code permettant au premier microcontrôleur 10 de communiquer avec le deuxième microcontrôleur 11 puis ajoute un temps de traduction des messages à destination du deuxième microcontrôleur 11. Dans la pratique, le temps de personnalisation de l'ensemble avoisine les 100 secondes, ce qui est très long.

L'invention vise à réduire fortement le temps de personnalisation d'une carte à mémoire incluant un deuxième microcontrôleur qui réalise une fonction intelligente et qui nécessite une personnalisation qui lui est propre. L'invention résout le problème posé en donnant un accès externe au bus de communication qui relie les premier et deuxième microcontrôleurs.

Plus particulièrement, l'invention est un dispositif à circuit intégré comportant un connecteur, un premier circuit et un deuxième circuit. Le connecteur est conforme à un standard de communication. Le premier circuit dispose d'un premier microcontrôleur, d'une première interface de communication reliée au connecteur et d'une deuxième interface de communication. Le deuxième circuit dispose d'un deuxième microcontrôleur et d'une interface de communication reliée à la deuxième interface. La deuxième interface dispose d'au moins une entrée/sortie supportant un état de haute impédance et la liaison entre l'interface de communication du deuxième circuit et la deuxième interface est aussi reliée à au moins un plot de contact externe du dispositif permettant une connexion directe de l'interface de communication du deuxième circuit avec un dispositif externe.

Selon un premier mode de réalisation, le plot de contact est distinct du connecteur.

Selon un deuxième mode de réalisation, les plots de contact externe est un plot de contact appartenant au connecteur, ledit dispositif comportant en outre un multiplexeur pour relier le plot de contact soit à la première interface de communication, soit à l'interface de communication du deuxième circuit.

Selon différentes variantes de réalisation, la première interface de communication peut être conforme à l'un des standards de communication suivants : SD, MMC, Compact Flash et Memory Stick. L'interface de communication du deuxième circuit peut être conforme à la norme IS07816, à la norme USB, à la norme SWP ou à la norme I2C. En outre, le dispositif peut comporter une mémoire non volatile reliée au premier microcontrôleur, ledit premier microcontrôleur assurant la gestion de ladite mémoire.

Selon un autre aspect, l'invention est un procédé de personnalisation d'un dispositif comportant un premier et un deuxième micro contrôleur et une pluralité de plot de communication. On fournit des données de personnalisation pour le premier microcontrôleur sur une première partie des plots de communication selon un protocole conforme à un premier standard de communication et on fournit des données de personnalisation du deuxième microcontrôleur sur une deuxième partie des plots de communication selon un deuxième protocole de communication.

Selon un mode de réalisation préféré, les plots de communication peuvent former un connecteur conforme au premier standard de communication dont la deuxième partie des plots de communication est détournée pour être utilisée selon le deuxième standard de communication pendant la fourniture de des données de personnalisation du deuxième microcontrôleur. Après la fourniture des données de personnalisation aux premier et deuxième microcontrôleurs, la deuxième partie des plots de communication est réaffectée selon le premier standard de communication.

L'invention sera mieux comprise à la lecture de la description qui va suivre en se référant aux dessins annexes, parmi lesquels:
la figure 1 représente une carte selon l'état de la technique,
la figure 2 représente un premier mode de réalisation de l'invention, et
la figure 3 représente un deuxième mode de réalisation de l'invention.

La figure 2 montre un premier mode de réalisation d'une carte à mémoire 100 selon l'invention. La carte à mémoire 100 comporte un premier microcontrôleur 110, un deuxième microcontrôleur 111 et une mémoire 112. Le premier microcontrôleur 110 dispose d'une interface SD pour communiquer avec l'extérieur, d'une interface 113 conforme à la norme IS07816 pour communiquer avec le deuxième microcontrôleur 111 et d'un bus parallèle pour lire et écrire dans la mémoire 112. En outre, l'interface 113 dispose d'entrées/sorties trois états, c'est-à-dire disposant d'un mode dit de haute impédance qui permet à l'interface 113 de se déconnecter électriquement de l'interface du deuxième microcontrôleur 111 à laquelle elle est reliée. La liaison entre les interfaces des premier et deuxième microcontrôleurs 110 et 111 et en outre reliée à des plots de contact externe 115 permettant de connecter un dispositif extérieur.

Dans ce premier mode de réalisation, la carte à mémoire 100 est muni d'un connecteur 114 relié à l'interface SD du premier microcontrôleur 110 et de plots de contact externe 115 distincts. L'homme du métier pourra remarquer qu'il n'est pas nécessaire d'avoir un connecteur conforme à la norme IS07816 car seul les contacts servant à l'échange de donnée (en l'occurrence RST, CLK et DAT) sont nécessaires, l'alimentation de l'ensemble pouvant se faire par le connecteur 114.

Avec ce mode de réalisation, la personnalisation de la carte s'effectue en parallèle sur les deux microcontrôleurs 110 et 111. L'interface SD est utilisée pour personnaliser le premier microcontrôleur en lui faisant formater la mémoire 112 et en le configurant pour traduire des commandes SD-MCE en commandes IS07816. Les plots de contact externes 115 sont utilisés pour personnaliser le deuxième microcontrôleur en fournissant directement des commandes APDU. Pendant la personnalisation des deux microcontrôleurs 110 et 111, l'interface 113 est mise en haute impédance afin de ne pas perturber le chargement des données dans le deuxième microcontrôleur 111.

Ce premier mode de réalisation présente comme inconvénient de rajouter des plots de contact externe 115 en plus du connecteur 114. En grande série, cela revient à induire un coût supplémentaire que l'on peut souhaiter vouloir supprimer.

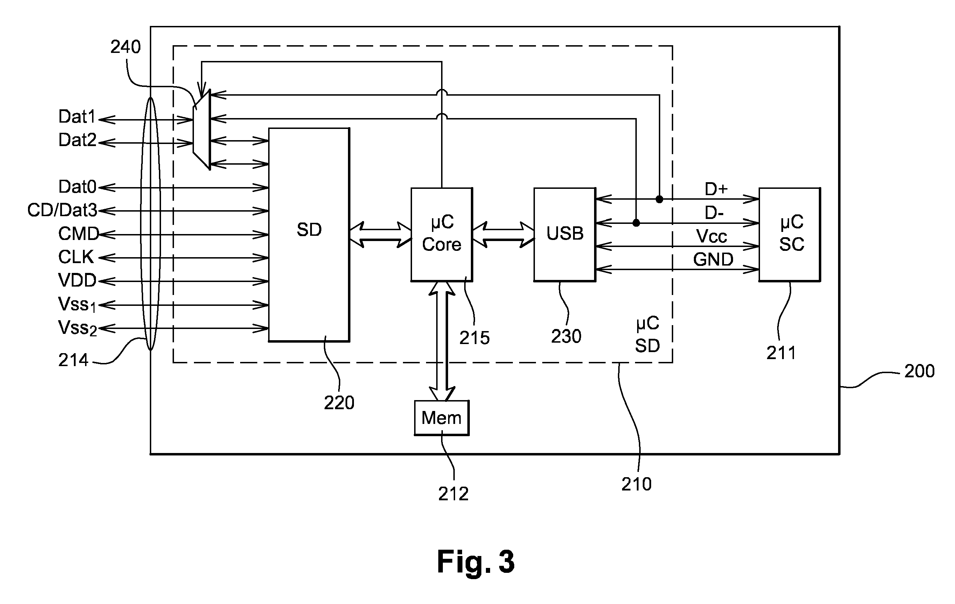

La figure 3 montre le deuxième mode de réalisation d'une carte à mémoire 200 selon l'invention. Ce deuxième mode de réalisation n'utilise pas de plots de contact externe en plus du connecteur.

La carte à mémoire 200 comporte un premier microcontrôleur 210, un deuxième microcontrôleur 211 et une mémoire 212. Le premier microcontrôleur 210 comporte un coeur de microcontrôleur 215, d'une première interface 220, conforme au standard SD, d'une deuxième interface 230, conforme au standard USB, d'un circuit de multiplexage 240. Le coeur de microcontrôleur 215 est relié aux première et deuxième interfaces 220 et 230, et il dispose d'un bus parallèle pour lire et écrire dans la mémoire 212. L'interface 230 est reliée au deuxième microcontrôleur 211 par l'intermédiaire d'entrées/sorties trois états, c'est-à-dire disposant d'un mode dit de haute impédance qui permet à l'interface 230 de se déconnecter électriquement de l'interface du deuxième microcontrôleur 211.

La deuxième interface 230 est une interface USB qui dispose, d'une part, de deux ports d'alimentation VCC et GND et, d'autre part, de deux ports d'entrée/sortie D+ et D-. La mise en haute impédance se fait uniquement sur les ports d'entrée/sortie D+ et D- car l'alimentation peut être assurée en permanence. La première interface 220 dispose d'une part de ports d'alimentation VDD, VSS1 et VSS2 et, d'autre part, de ports d'entrée CLK ou d'entrée/sortie, CMD, DAT0 DAT1, DAT2, DAT3/CD. Tous les ports de la première interface sont définis dans le standard SD. Dans la norme SD, il est prévu un mode de transfert sur un fil de données qui correspond à DAT0 ou sur quatre fils de données DAT0 DAT1, DAT2 et DAT3. En outre le port d'entrée/sortie DAT3 est aussi utilisé lors du démarrage pour que la carte soit détectée par le lecteur et éventuellement basculer en mode SPI. Aussi, les ports d'entrée/sortie de la première interface 220 sont couplés à deux contacts d'un connecteur 214 conforme au standard SD par l'intermédiaire du multiplexeur 240. Les autres ports VDD, VSS1, VSS2, CLK, CMD, DAT0 et DAT3/CD de la première interface 220 sont directement reliés aux contacts respectifs du connecteur 214.

Le multiplexeur 240 est aussi relié aux ports de données D+ et D- de la deuxième interface 230 de sorte que ces ports de données puissent être reliés aux plots de contact du connecteur 214 correspondant aux plots DAT1 et DAT2. Le premier microcontrôleur 215 contrôle le multiplexeur et la mise en haute impédance des ports de données de la deuxième interface selon le tableau suivant :

| | | |
|---|---|---|
| | Liaison du Multiplexeur 240 | Etat ports de données D+ et D- de la deuxième interface 230 |
| Pendant la personnalisation | Plots de contact DAT1 et DAT2 reliés aux ports D+ et D- | Mise en haute impédance |
| Pendant une utilisation autre que la personnalisation | Plots de contact DAT1 et DAT2 reliés aux ports DAT1 et DAT2 de la première interface | Entrées/sorties actives |

Ainsi, lors de la personnalisation, le deuxième microcontrôleur 211 peut être directement programmé à partir des plots de contact DAT1 et DAT2 du connecteur 214. Il convient d'avoir un lecteur adapté pour fournir des signaux USB sur ces deux plots de contact. En parallèle, le premier microcontrôleur 210 peut être programmé par l'intermédiaire de la première interface 220 en utilisant le mode de communication sur un fil qui correspond au mode de communication par défaut.

Le contrôle du multiplexeur 240 et de la mise en haute impédance est assuré par le coeur 215 du microcontrôleur 210. A titre d'exemple, un registre non volatile du coeur 215 peut disposer d'un bit dont l'état change à l'issue de la personnalisation des deux microcontrôleurs 210 et 211, ce bit contrôlant le multiplexeur 240 et la mise en haute impédance. Il est également possible de disposer d'une commande pour faire basculer ce bit dans un état ou un autre à partir du bus SD.

Lorsque la personnalisation est terminée, le deuxième microcontrôleur 211 est accessible par la deuxième interface 230 du premier microcontrôleur et la première interface peut fonctionner aussi bien en mode SD sur un fil qu'en mode SD sur 4 fils.

Dans l'exemple décrit, la personnalisation se fait en parallèle et cela permet de minimiser au mieux le temps de personnalisation. Toutefois, il est possible que la personnalisation se fasse de manière séparé tout en permettant également de réduire le temps total de personnalisation. En effet, lorsque la personnalisation du deuxième microcontrôleur 211 se fait à travers le premier microcontrôleur 210, les données de personnalisation doivent être reformatées par le premier microcontrôleur puis envoyer au deuxième microcontrôleur. Ce n'est qu'après installation par le deuxième microcontrôleur que celui-ci peut envoyer un message signalant qu'un paquet de données a été correctement installé, le message passant à travers le premier microcontrôleur. Chaque paquet de données à installer se voit alors ralenti par le transit des données dans le premier microcontrôleur et l'utilisation de l'invention permet de réduire d'un facteur 3 la personnalisation du deuxième microcontrôleur indépendamment de la personnalisation du premier microcontrôleur.

Dans le cas où la personnalisation ne s'effectue pas en parallèle, il est aussi possible de multiplexer un plus grand nombre de fils sur le connecteur SD 214. En effet, il n'est alors plus nécessaire de maintenir une communication SD et donc, tous les fils de données ou de commande peuvent être utilisés pour l'interface du deuxième circuit.

Les modes de réalisation montrent l'utilisation de standards SD, USB, et IS07816. De nombreuses variantes sont possibles. Le standard SD peut être remplacé par tout autre standard de carte à mémoire, et notamment, MMC, Compact Flash, et Memory Stick. Et les standards IS07816 et USB peuvent être remplacés par tout autre standard de communication entre circuit tel que par exemple SWP ou encore I2C.

## Revendications

1. Dispositif à circuit intégré comportant :
- un connecteur (114, 214) conforme à un standard de communication,
- un premier circuit (110, 210) disposant d'un premier microcontrôleur, d'une première interface (SD, 220) de communication reliée au connecteur (114, 214), d'une deuxième interface de communication (113, 230),
- un deuxième circuit (111, 211) disposant d'un deuxième microcontrôleur et d'une interface de communication reliée à la deuxième interface (113, 230),
**caractérisé en ce que** la deuxième interface (113, 230) dispose d'au moins une entrée/sortie supportant un état de haute impédance et **en ce que** la liaison entre l'interface de communication du deuxième circuit (111, 211) et la deuxième interface (113, 230) est aussi reliée à au moins un plot (115, Dat1, Dat2) de contact externe du dispositif permettant une connexion directe de l'interface de communication du deuxième circuit (113, 230) avec un dispositif externe.

2. Dispositif selon la revendication 1, dans lequel le plot de contact (115) est distinct du connecteur (114).

3. Dispositif selon la revendication 1, un dans lequel le plot de contact (Dat1, Dat2) externe est un plot de contact appartenant au connecteur (214), ledit dispositif comportant en outre un multiplexeur (240) pour relier le plot de contact soit à la première interface de communication (220), soit à l'interface de communication du deuxième circuit (211).

4. Dispositif selon la revendication 1, dans lequel la première interface de communication est conforme à l'un des standards de communication suivants : SD, MMC, Compact Flash et Memory Stick.

5. Dispositif selon la revendication 1, dans lequel l'interface de communication du deuxième circuit est conforme à la norme IS07816, à la norme USB, à la norme SWP ou à la norme I2C.

6. Dispositif selon la revendication 1, lequel comportant en outre une mémoire non volatile (112, 212) reliée au premier microcontrôleur (210), ledit premier microcontrôleur assurant la gestion de ladite mémoire.

7. Procédé de personnalisation d'un dispositif comportant un premier et un deuxième micro contrôleur et une pluralité de plot de communication dans lequel, on fournit des données de personnalisation pour le premier microcontrôleur sur une première partie des plots de communication selon un protocole conforme à un premier standard de communication et on fournit des données de personnalisation du deuxième microcontrôleur sur une deuxième partie des plots de communication selon un deuxième protocole de communication.

8. Procédé selon la revendication 7, dans lequel les plots de communication forme un connecteur conforme au premier standard de communication dont la deuxième partie des plots de communication est détournée pour être utilisée selon le deuxième standard de communication pendant la fourniture de des données de personnalisation du deuxième microcontrôleur.

9. Procédé selon la revendication 8, dans lequel, après la fourniture des données de personnalisation aux premier et deuxième microcontrôleurs, la deuxième partie des plots de communication est réaffectée selon le premier standard de communication.

10. Procédé selon la revendication 7, dans lequel le premier standard est choisi parmi les standards : SD, MMC, Compact Flash et Memory Stick.

11. Procédé selon la revendication 7, dans lequel le deuxième standard de communication correspond au standard IS07816, au standard USB, au standard SWP ou au standard I2C.
